# EUROPEAN PATENT SPECIFICATION

(11) **EP 2 188 118 B1**
(45) Date of publication and mention of the grant of the patent: **08.10.2014**
(21) Application number: 08796955.6
(22) Date of filing: 31.07.2008
(51) Int. Cl.: B32B 5/24, B32B 5/26, B32B 5/28, D04H 13/00

(54) **NEEDLE BONDED COMPLEX**
VERNADELTER KOMPLEX
COMPLEXE LIÉ PAR AIGUILLE

(30) Priority: 07.08.2007 FR 0756982
(43) Date of publication of application: 26.05.2010
(73) Proprietor: OCV Intellectual Capital, LLC, Toledo, OH 43659 (US)
(72) Inventor: ROCHER, Gilles, F-73000 Chambery (FR); ROEDERER, Francois, F-73000 Chambery (FR)
(74) Representative: Intès, Didier Gérard André
(86) International application number: PCT/US2008/071757
(87) International publication number: WO 2009/020831

(56) References cited:
- EP-A- 0 296 970
- EP-A- 0 822 062
- WO-A-98/42904
- WO-A-02/084005
- WO-A-2005/054559
- FR-A- 2 463 221
- FR-A- 2 898 900
- US-A- 4 495 235
- US-B1- 6 258 739

## Description

### TECHNICAL FIELD AND INSUTRIAL APPLICABILITY OF THE INVENTION

The invention relates to a needle bonded complex intended for impregnation by a resin in the context of the production of a composite material. The complex associates a number of layers of different materials juxtaposed parallel between one another and has at least one layer of a fibrous reinforcing structure (for reinforcing the final composite material) and a layer of a material that considerably modifies the thickness of said complex, hereafter called thickening material.

### BACKGROUND OF THE INVENTION

A method for preparing a needle glass mat is disclosed in patent document WO 2005/054 559 A1.

A composite substrate for plastic reinforcement, which comprises a fiber mat and a closed cell foam sheet which are integrated by needling is disclosed in patent document EP 08 22 062 A1.

### SUMMARY OF THE INVENTION

A process for preparation of a complex and a complex according to the invention are defined in appended claims 1 and 22, respectively.

The thickening material can have different functions and particularly at least one of the following two functions:
1) if the material is particularly permeable to the impregnation resin, its role can be to thicken the complex in order to facilitate the progression of the resin during the impregnation step;
2) if the material has particular mechanical properties such as a good stiffness, for example, its role can be to give its mechanical properties to the final composite.

### DETAILED DESCRIPTION AND PREFERED EMBODIMENTS OF THE INVENTION

Other functions of the thickening material can be envisaged, in particular such as to aid in occupying the volume of the mold (the case of the RTM process) or to help reach a certain thickness in the final piece without excessively increasing the weight of the piece. In the case of the RTM process, one aims in particular for a fibrous reinforcement that is close to the two sides of the composite material. If the distance between the two parts of the mold is too great (the space between the two parts of the mold is known as the clearance), there is a risk of accumulation of all the reinforcement toward a single side of the final material, while the other side will be richer in resin, with the risk of giving the material unsatisfactory mechanical properties. The thickening material, placed in the center, with the fibrous structure on either side of it enables this problem to be solved.

In general, the thickening material is placed between two layers of fibrous reinforcing structure generally containing glass fiber. In all cases, the complex is assembled by needle bonding. Since the thickening material is generally placed between two layers of fibrous reinforcing structure, it is generally not visible to the naked eye in the final composite.

According to the invention, the thickening material thickens the whole, which includes the fibrous structures and the thickening material itself, before needle bonding. Thickening is therefore observed when the different layers of the future complex are juxtaposed on one another in the order corresponding to that of the final composite, at least when it is not subjected to a compression force exerted on its sides, in comparison with the same assembly without thickening material.

According to the invention, a very particular needle bonding operation is carried out in order to assemble the different layers of the complex, giving it sufficient consistency, not breaking any strands or breaking very few strands, and not forming any holes that can be seen with the naked eye on its surface. According to the invention, the needle bonding is done by needles that move at the same time as the mat, with essentially the same speed as the mat in a direction parallel to the direction of movement of the mat. Furthermore, the number of needle impacts is reduced and is at most 25 impacts per cm², and preferably at most 15 impacts per cm², and even more preferably at most 10 impacts per cm² and can even be less than 5 impacts per cm². Generally, the number of needle impacts is at least 1 impact per cm² and preferably at least 2 impacts per cm².

Thus, the invention relates in the first place to a process for preparation of a complex, which includes
a) the production of a sheet associating at least one layer of a fibrous reinforcing structure and a layer of thickening material,
b) needle bonding using barbed needles that pass through at least said layer of fibrous structure and at least partially through the layer of thickening material and that move in the direction of the sheet at roughly the same speed as the sheet when they pass through it, with an impact density ranging from 1 to 25 impacts per cm².

Preferably, the barbs of the needles are directed toward their support (usually called needle board), but they can also be oriented in the opposite direction. Preferably, at least 1 barb and preferably 2 barbs of each needle penetrate with each impact in the sheet. Preferably, the needles have a diameter (smallest circle entirely containing any cross section of the needle including the barbs) ranging from 0.2 to 3 mm and even more preferably 0.5 to 1.5 mm. Such a needle bonding leads to a complex that can be manipulated, which does not prick the hands, without hole marks on the surface. Thanks to this very particular needle bonding operation, the sheet can be moved forward at high speeds, for example, at least 2 meters per minute and even at least 5 meters per minute and even at least 8 meters per minute. Generally, the speed is at most 35 or even at most 30 meters per minute, or even at most 20 meters per minute. During the passage of the needles through the fibrous structure, strands are taken in the barbs and carried along forming loops without breaking of the strands. These loops bind the complex and let it deform easily while continuing to function as binder. These loops do not prick the hands because the strands are not broken.

In order to carry out such needle bonding, it is possible, for example, to use certain pre-needle bonding machines normally designed for processing polymer fiber felts, such as the machine referenced PA169 or PA1500 or PA2000 marketed by Asselin (NSC group). In this type of machine, the needles describe an elliptical movement with a horizontal component enabling the needles in the complex to follow it in its movement.

According to a first embodiment, the thickening material can be chosen in order to facilitate the progression of the resin of the final composite during the impregnation step. The thickening material should in that case have a better permeability to the resin than the layer of fibrous structure with which it is associated, under the impregnation conditions, which can go hand in hand with the need to have a better crushing strength. In effect, different processes for production of composite materials exist, and in particular the injection process (called "RTM" in English "Resin Transfer Molding") and the infusion process. These processes in their principles are well known to the expert in the field.

According to the RTM process, a structure to be impregnated with resin is placed between a rigid mold and a rigid counter-mold (both generally made of metal or composite), and after application of a vacuum, resin is injected in order to migrate and fill the whole space between the mold and the counter-mold (called "clearance"). Under the effect of a vacuum, certain deformable molds and/or counter-molds (particularly those made of composite) can then crush the structure to be impregnated, which can considerably hinder the migration of the resin within said structure.

According to the infusion process, the structure is placed between a rigid mold and a plastic film (or cover), the latter being responsible for compressing the structure to be impregnated under the effect of a vacuum before impregnation. In this case, the capacity of the structure to resist crushing under the effect of the vacuum can have a huge influence on the flow speed of the resin. In the case of large pieces, the operator places drains (or ducts) over the mat in order to aid the migration of the resin. These ducts are removed at the same time as the cover after polymerization of the resin.

It is seen therefore that the RTM and infusion processes bring about crushing of the structure to be impregnated, which makes it denser at the time of impregnation and therefore less permeable to the impregnation resin. A thickening material chosen for its crushing resistance and for being particularly permeable provides a solution to this problem. Such a thickening material can be chosen from the list of the following materials: non-woven fabric of crimped polypropylene fibers, non-woven fabric made of polyester marketed under the brand Soric by the company Lantor, three-dimensional sheet made of polyamide such as that made of nylon marketed under the brand Enkamat by the company Colbond. The materials just mentioned have a thickening effect on the whole width of the complex.

Let us note that as a draining material (with regard to the impregnation resin), it is possible to use materials that do not particularly thicken the complex. In effect, still in this idea of improving the progression of the impregnation resin, it would be possible to use, as draining material, a channel, placed parallel to the fibrous reinforcing structure, and which drains the resin. The channel forms a preferred route for the resin inside which it rapidly flows, more rapidly than directly through the fibrous reinforcing structure. This draining method is the object of a patent application other than this one, filed on the same day in the name of the same applicant company.

According to a second embodiment, the thickening material can be chosen so as to give the final composite material certain mechanical properties. In particular, the thickening material can be a foam such as a polyurethane foam. We refer in this case in particular to the applications of the truck wall or boat floor type. Such a foam generally has a closed porosity so that the impregnation resin cannot normally pass through it. However, the needle bonding used in the context of the present invention, and intended for binding the fibrous reinforcing structure to the thickening material, punctures at least the side of the foam in contact with the fibrous reinforcing structure, which enables penetration of the impregnation resin also into the thickening material, at the site of the needle impacts. If the needle bonding passes through the thickening material, resin can even pass through its whole thickness. In all cases, the filling of the openings created by the needles in the thickening material results in excellent binding between the different layers contained in the composite, which tends to reduce the risks of delamination. In addition to penetration of the resin into the thickening material, the needle bonding makes strands of the fibrous reinforcing structure penetrate into the thickening material, which also contributes towards improving the binding between the different constituents of the composite. The final composite material has two resin skins separated from one another by the foam that causes mechanical stresses to be communicated from one skin to the other. This separation contributes toward increasing the stiffness of the final composite. For this type of application, the thickening material generally has a thickness between 1 mm and 20 mm. The resin that has penetrated and filled the holes made by the needle bonding leads to the production of veritable tenons connected to at least one surface skin made of resin and re-entering the foam transversely with respect to the plane of the final composite. The quantity of tenons connected to the surface of the final composite corresponds to the quantity of needle bonding impacts.

Thus, the invention relates also to a composite material containing a complex according to the invention and a resin matrix, the thickening material being a foam; tenons connected to at least one surface skin including the textile layer and resin, re-enter the foam transversely with respect to the plane of the final composite material, with a density of the tenons of at most 25 tenons per cm² of surface skin including the textile layer, or even at most 15 tenons per cm² of surface skin including the textile layer, or even at most 10 tenons per cm² of surface skin including the textile layer, or even at most 5 tenons per cm² of surface skin including the textile layer. In particular, this density can be at least 1 or even at least 2 tenons per cm² of surface skin including the textile layer. The site of the tenons corresponds to the place where the needles have punctured the foam, and since the needles have carried fiber from the fibrous structure inside the foam, the tenons penetrating into the foam can contain fiber.

In all cases, the thickening material thickens the sheet at least locally by at least 25% with respect to the same sheet without thickening material.

The particular needle bonding used in the context of the present invention (1 to 25 impacts per cm² and even fewer than 5 impacts per cm²) greatly spares the integrity of the thickening material, which is particularly advantageous notably in the case of a foam that is by nature fragile with regard to any needle bonding. Conventional needle bonding (considered by the expert in the field to be well over 25 impacts/cm²) in effect tends to destroy the internal structure of the foam, which then no longer has the same crushing resistance and bending resistance. A good bending resistance of the foam in particular makes suitable manipulation of the complex possible before migration. The moderate needle bonding according to the invention makes it possible to attain this objective.

The fibrous reinforcing structure can be of a type with chopped strands or with continuous strands. It generally contains glass fiber. For the case in which the fibrous reinforcing structure contains glass strands, the glass strands have preferably been sized by a composition containing water, the dry extract of said composition containing 1 to 30 wt% of a coupling agent and 30 [sic; 70] to 99 wt% polyvinylpyrrolidone, with it understood that the strands can be dried partially or totally or not at all before the needle bonding. Such sizing was the object of international patent application PCT/FR2007/050968 of March 20, 2007.

The fibrous reinforcing structure can be a mat with continuous strands bound by needle bonding (and without chemical binder) as described in WO2005/054559. The fibrous reinforcing structure can therefore be bound chemically or mechanically before being associated with the thickening material by needle bonding. It is however possible for it not to be bound, the particular needle bonding taking place in the context of the present invention then providing all the binding necessary for the complex, that between its different layers and those of each of its layers considered individually. If the fibrous reinforcing structure is not pre-bound before association with the layer of thickening material, it is possible, for example, to proceed in this way in order to produce the complex: one starts with the chosen thickening material already manufactured, which is run horizontally on a belt and continuous strands are projected onto it by unwinding from spools thanks to an arm performing a rocking movement across the belt that is running by. For more details on this projecting technique, one can refer in particular to WO02084005 or to WO2005054559. Instead of unwinding continuous strands from spools, it is also possible to manufacture a strand continuously under a die, to size it and project it directly, immediately after extrusion, onto the belt running by. Thus, the invention also relates to the process according to which the sheet is produced continuously, the glass strand being fiber-formed continuously and then incorporated in said sheet continuously, without intermediate storage of the glass strand (in spool form, for example). In such a continuous process, the thickening material is generally pre-manufactured, wound for storage and unwound for incorporation into the continuously formed sheet. The thickening material can also be stacked in slabs and unstacked for incorporation into the continuously formed sheet.

The sheet thus formed and containing the thickening material covered with a layer of continuous strands is then sent to the needle bonding device, which proceeds to bind the complex. Generally, the complex has a layer of fibrous reinforcing structure on either side of the thickening material. In the example just given, it is then sufficient to project continuous strands on the belt before depositing the layer of thickening material and then the second layer of continuous strands by projecting.

The needle bonding is always done on the side of a layer of fibrous reinforcing structure so that the needles carry strands of the fibrous reinforcing structure across the layer of thickening material. The complex can consist of a single layer of fibrous structure and of a single layer of thickening material, in which case the needle bonding is done on the side of the layer of fibrous structure in order to carry its fibers inside the thickening material. A layer of fibrous reinforcing structure can also be positioned and needle bonded on each side of the thickening material. For the case in which the complex has two layers of fibrous reinforcing structure placed on either side of the thickening material, two simultaneous or successive needle bonding operations can take place from both sides of the complex. Furthermore, a layer of fibrous structure can include a number of stacked sub-layers of fibrous structure. For example, a layer of fibrous structure on one side of the thickening material can contain a fabric or multiaxial sub-layer in direct contact with the thickening material and a sub-layer of continuous strands toward the exterior of the complex. The fabric or multiaxial sub-layer is then attached to the thickening material by the continuous strands coming from the sub-layer of continuous strands passing through it that are needle bonded into the thickening material.

It is not excluded in the context of the present invention for the needles of a first needle bonding device to first pass through a first layer of thickening material as long as
1) under this first layer of thickening material is first a layer of fibrous structure and then again below that a second layer of thickening material so that fibers of the fibrous structure are carried inside the second layer of thickening material, and
2) a second needle bonding device is placed on the side of the second layer of thickening material and causes fibers of the fibrous structure to go inside the first layer of thickening material.

According to this variant, there is indeed needle bonding of the second layer of thickening material "on the side of the fibrous reinforcing structure" by means of the first needle bonding device, and there is needle bonding of the first layer of thickening material "on the side of the fibrous reinforcing structure" by means of the second needle bonding device.

The complex according to the invention can therefore have two layers of thickening material between which there is a layer of fibrous structure, two needle bonding devices placed on either side of the assembly of the different juxtaposed layers having bound the whole.

The impregnation resin for the production of the composite material can be of the thermoplastic type but is generally of the heat hardening type (polyester, vinylester or epoxy).

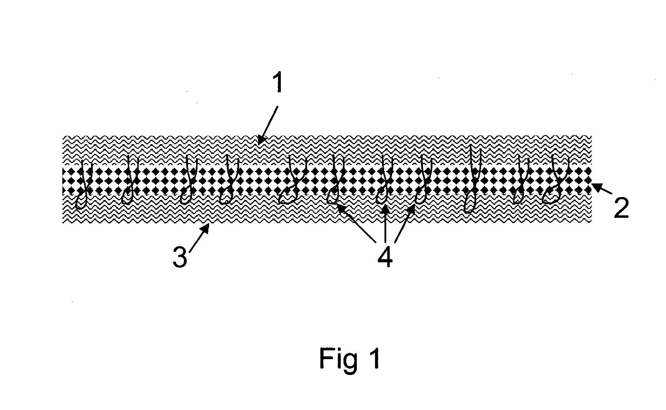

Figure 1 depicts a complex according to the invention that has layer 1 of continuous strands, layer 2 of thickening material, and layer 3 of continuous strands identical to layer 1. A needle bonding operation has been carried out on the side of layer 1 by barbed needles, the needles moving in the direction of the sheet at essentially the same speed as the sheet when they pass through it, with an impact density of 1 to 25 impacts per cm². This needle bonding brought about the formation of loops 4 of strands coming from layer 1 and completely passing through layers 1 and 2 and partially or completely through layer 3.

### BREIF DESCRIPTION OF THE DRAWINGS

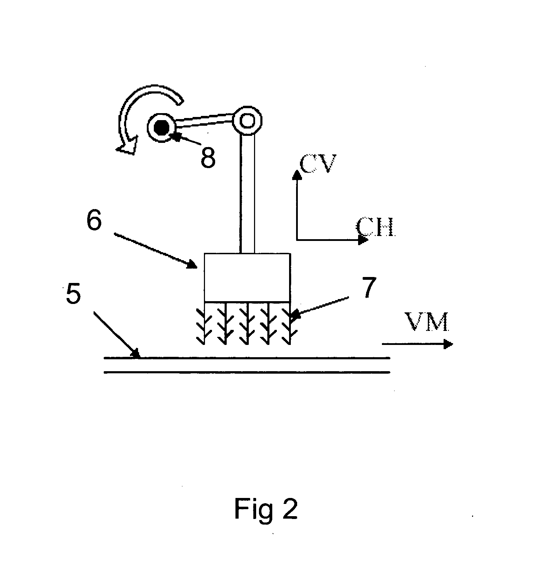

Figure 2 very diagrammatically depicts the principle of the needle bonding thanks to which the needles accompany the complex when they penetrate it. Complex 5 moves forward under board 6 provided with needles 7 with barbs oriented towards their support, the so-called needle board (the orientation of the barbs could have been the reverse), said board being given a movement with two components, one horizontal CH and the other vertical CV, thanks to a system of connecting rods turning around fixed point 8. The dimensions of these different elements of the machine are determined so that the horizontal component CH is essentially identical to the speed of the complex VM when the needles are in the complex. The depiction of Figure 2 is very diagrammatic, and in comparison with the simple circular movement suggested by Figure 2, even if it is satisfactory, an elliptical movement is preferred (the major axis of the ellipse being vertical and the minor axis of the ellipse being horizontal), enabling the horizontal component to better follow the speed of the complex that is generally constant.

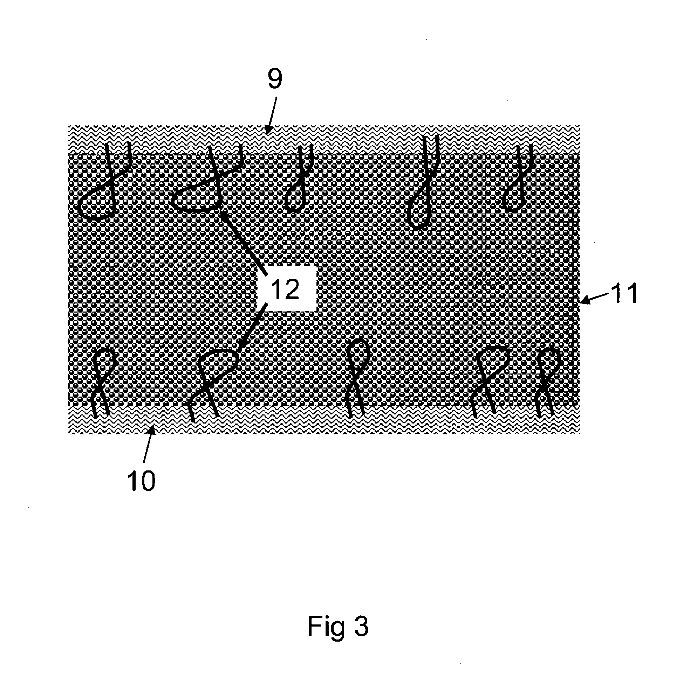

Figure 3 depicts a complex needle bonded according to the invention for an application of the truck wall or boat floor type. This complex associates two layers 9 and 10 of continuous glass strands and layer 11 of polyurethane foam with closed porosity. In this case, taking into account the great thickness of the foam layer, needle bonding from both sides of the complex was carried out (it is clear that needle bonding could have been done passing completely through the foam). Loops 12 of strands coming from the layers of continuous strands have thus been carried into a certain thickness of the foam, on both sides of this foam layer. This complex is intended for impregnation with resin, particularly a heat hardening resin. Tenons of heat hardening resin, connected to the surface skins made of composite reinforced by fibrous reinforcing structures 9 and 10, then form in the needle holes, particularly at the site of formation of the loops of strands inside the foam.

## Claims

1. A process for preparation of a complex, which includes:
a) producing a sheet by associating in a juxtaposed manner at least one layer of a fibrous reinforcing structure (1, 3) and a layer of a thickening material (2) that considerably thickens said sheet,
b) needle bonding said sheet on the side of the fibrous reinforcing structure by passing barbed needles (7) through said at least one layer of a fibrous structure and at least partially through the layer of thickening material as the sheet is moving, the needles having a component of movement (CH) that is parallel to the movement (VM) of the sheet, the component of movement having essentially the same speed as the sheet when the needles pass through the sheet, the needle bonding having an impact density ranging from 1 to 25 impacts per cm²,
wherein said at least one layer of a fibrous reinforcing structure (1, 3) and said layer of a thickening material (2) are different materials.

2. A process according to the preceding claim, wherein the layer of a fibrous reinforcing structure (1, 3) contains continuous glass strands.

3. A process according to the preceding claim, wherein the fibrous structure contains glass strands that have been sized by a composition containing water, the dry extract of said composition containing 1 to 30 wt% of a coupling agent and 30 to 99 wt% polyvinylpyrrolidone.

4. A process according to either of the two preceding claims, wherein the sheet is produced continuously, the glass strand being fiber formed continuously and then incorporated in said sheet continuously, without intermediate storage of the glass strand.

5. A process according to one of the preceding claims, wherein the impact density of the needle bonding is at most 15 impacts per cm².

6. A process according to the preceding claim, wherein the impact density of the needle bonding is at most 10 impacts per cm².

7. A process according to the preceding claim, wherein the impact density of the needle bonding is at most 5 impacts per cm².

8. A process according to one of the preceding claims, wherein the impact density of the needle bonding is at least 1 impact per cm².

9. A process according to the preceding claim, wherein the impact density of the needle bonding is at least 2 impacts per cm².

10. A process according to one of the preceding claims, wherein the sheet moves forward at a speed of at least 2 meters per minute.

11. A process according to the preceding claim, wherein the sheet moves forward at a speed of at least 5 meters per minute.

12. A process according to the preceding claim, wherein the sheet moves forward at a speed of at least 8 meters per minute.

13. A process according to one of the preceding claims, wherein the sheet moves forward at a speed of at most 35 meters per minute.

14. A process according to the preceding claim, wherein the sheet moves forward at a speed of at most 30 meters per minute.

15. A process according to the preceding claim, wherein the sheet moves forward at a speed of at most 20 meters per minute.

16. A process according to one of the preceding claims, wherein the thickening material (2) is chosen from the list of the following materials: non-woven fabric of crimped polypropylene fibers, non-woven fabric made of polyester, three- dimensional sheet made of polyamide.

17. A process according to one of Claims 1 to 15, wherein the thickening material (2) is a foam and that unbroken loops (12) of the fibrous structure are formed in the foam by needle bonding with barbed needles (7).

18. A process according to claim 17, wherein the foam is made of polyurethane and has a closed porosity.

19. A process according to claim 17, wherein the thickening material has a thickness between 1 and 20 mm.

20. A process according to one of claims 16 or 17, wherein the thickening material at least locally thickens the sheet by at least 25%.

21. A process according to one of claims 16 or 17, wherein a layer of fibrous reinforcing structure (1, 3) is positioned and needle bonded on both sides of the thickening material (2).

22. A complex comprising a sheet containing at least one textile reinforcing layer (1, 3) and a thickening material (2), wherein said at least one textile reinforcing layer and said thickening material of said sheet are connected by a needle bonding operation that includes passing barbed needles (7) through said at least one textile reinforcing layer and at least partially through said thickening material as the sheet is moving, the needles having a component of movement (CH) that is parallel to the movement (VM) of the sheet, said component of movement (CH) having essentially the same speed as the sheet when the needles (7) pass through the sheet, wherein the impact density of the needle bonding operation ranges from 1 to 25 impacts per cm², and
wherein said at least one textile reinforcing layer (1, 3) and said thickening material (2) are different materials.

23. A composite material containing a resin matrix and a complex according to claim 22, wherein said thickening material is a foam, and wherein unbroken loops (12) of fibers from said at least one textile reinforcing layer are formed in the foam by the barbed needles (7) used in the needle bonding operation, and wherein tenons that are formed at the site of the loops as a result of the needle bonding operation are connected to a surface skin including said at least one textile layer and said resin, said tenons re-entering the foam transversely with respect to the plane of the material and having a density of at most 25 tenons per cm² of surface skin including the textile layer.

24. A material according to the preceding claim, wherein the density of tenons is at most 15 tenons per cm² of surface skin including the textile layer.

25. A material according to the preceding claim, wherein the density is at most 10 tenons per cm² of surface of the composite.

26. A material according to the preceding claim, wherein the density is at most 5 tenons per cm² of surface of the composite.

27. A material according to one of Claims 23 to the preceding claim, wherein the impact density of the needle bonding is at least 1 tenon per cm² of surface of the composite.

28. A material according to one of Claims 23 to the preceding claim, wherein the impact density of the needle bonding is at least 2 tenons per cm² of surface of the composite.

## Patentansprüche

1. Verfahren zur Herstellung eines Komplexes, umfassend:
a) Herstellen einer Platte durch Zusammenbringen auf nebeneinander liegende Weise mindestens einer Lage einer faserigen Verstärkungsstruktur (1, 3) und einer Lage eines Verdickungsmaterials (2), das die Platte wesentlich verdickt,
b) Vernadeln der Platte auf der Seite der faserigen Verstärkungsstruktur durch Hindurchführen von mit Widerhaken versehenen Nadeln (7) durch mindestens eine Lage einer faserigen Struktur und mindestens teilweise durch die Lage von Verdickungsmaterial, während die Platte sich bewegt, wobei die Nadeln eine Bewegungskomponente (CH) aufweisen, die parallel zur Bewegung (VM) der Platte liegt, wobei die Bewegungskomponente im Wesentlichen dieselbe Geschwindigkeit aufweist wie die Platte, wenn die Nadeln durch die Platte hindurchgehen, wobei das Vernadeln eine Stoßdichte im Bereich von 1 bis 25 Stößen pro cm² aufweist,
wobei mindestens eine Lage einer faserigen Verstärkungsstruktur (1, 3) und die Lage eines Verdickungsmaterials (2) verschiedene Materialien sind.

2. Verfahren nach dem vorhergehenden Anspruch, wobei die Lage eines faserigen Verstärkungsmaterials (1, 3) kontinuierliche Glasstränge enthält.

3. Verfahren nach dem vorhergehenden Anspruch, wobei die faserige Struktur Glasstränge enthält, die mit einer wasserhaltigen Zusammensetzung geschlichtet worden sind, wobei das trockene Extrakt der Zusammensetzung 1 bis 30 Gew.-% eines Haftmittels und 30 bis 99 Gew.-% Polyvinylpyrrolidon enthält.

4. Verfahren nach einem der beiden vorhergehenden Ansprüche, wobei die Platte kontinuierlich hergestellt wird, der Glasstrang kontinuierlich aus Fasern gebildet wird und dann kontinuierlich in die Platte ohne Zwischenlagerung des Glasstrangs eingearbeitet wird.

5. Verfahren nach einem der vorhergehenden Ansprüche, wobei die Stoßdichte des Vernadelns höchstens 15 Stöße pro cm² beträgt.

6. Verfahren nach dem vorhergehenden Anspruch, wobei die Stoßdichte des Vernadelns höchstens 10 Stöße pro cm² beträgt.

7. Verfahren nach dem vorhergehenden Anspruch, wobei die Stoßdichte des Vernadelns höchstens 5 Stöße pro cm² beträgt.

8. Verfahren nach einem der vorhergehenden Ansprüche, wobei die Stoßdichte des Vernadelns mindestens 1 Stoß pro cm² beträgt.

9. Verfahren nach dem vorhergehenden Anspruch, wobei die Stoßdichte des Vernadelns mindestens 2 Stöße pro cm² beträgt.

10. Verfahren nach einem der vorhergehenden Ansprüche, wobei die Platte sich mit einer Geschwindigkeit von mindestens 2 Metern pro Minute vorwärtsbewegt.

11. Verfahren nach dem vorhergehenden Anspruch, wobei die Platte sich mit einer Geschwindigkeit von mindestens 5 Metern pro Minute vorwärtsbewegt.

12. Verfahren nach dem vorhergehenden Anspruch, wobei die Platte sich mit einer Geschwindigkeit von mindestens 8 Metern pro Minute vorwärtsbewegt.

13. Verfahren nach einem der vorhergehenden Ansprüche, wobei die Platte sich mit einer Geschwindigkeit von höchstens 35 Metern pro Minute vorwärtsbewegt.

14. Verfahren nach dem vorhergehenden Anspruch, wobei die Platte sich mit einer Geschwindigkeit von höchstens 30 Metern pro Minute vorwärtsbewegt.

15. Verfahren nach dem vorhergehenden Anspruch, wobei die Platte sich mit einer Geschwindigkeit von höchstens 20 Metern pro Minute vorwärtsbewegt.

16. Verfahren nach einem der vorhergehenden Ansprüche, wobei das Verdickungsmaterial (2) aus der Liste der folgenden Materialien ausgewählt wird: Vliesstoff aus gekräuselten Polypropylenfasern, Vliesstoff, der aus Polyester hergestellt ist, dreidimensionale Platte, die aus Polyamid hergestellt ist.

17. Verfahren nach einem der Ansprüche 1 bis 15, wobei das Verdickungsmaterial (2) ein Schaumstoff ist und ungebrochene Schleifen (12) der faserigen Struktur in dem Schaumstoff durch Vernadeln mit mit Widerhaken versehenen Nadeln (7) gebildet werden.

18. Verfahren nach Anspruch 17, wobei der Schaumstoff aus Polyurethan hergestellt ist und eine geschlossene Porosität aufweist.

19. Verfahren nach Anspruch 17, wobei das Verdickungsmaterial eine Dicke zwischen 1 und 20 mm aufweist.

20. Verfahren nach einem der Ansprüche 16 oder 17, wobei das Verdickungsmaterial die Platte zumindest lokal um mindestens 25 % verdickt.

21. Verfahren nach einem der Ansprüche 16 oder 17, wobei eine Lage faseriger Verstärkungsstruktur (1, 3) auf beiden Seiten des Verdickungsmaterials (2) positioniert und vernadelt ist.

22. Komplex umfassend eine Platte, die mindestens eine Textilverstärkungslage (1, 3) und ein Verdickungsmaterial (2) enthält, wobei die mindestens eine Textilverstärkungslage und das Verdickungsmaterial der Platte durch einen Vernadelungsarbeitsgang verbunden werden, der das Hindurchführen von mit Widerhaken versehenen Nadeln (7) durch die mindestens eine Textilverstärkungslage und mindestens teilweise durch das Verdickungsmaterial, während die Platte sich bewegt, umfasst, wobei die Nadeln eine Bewegungskomponente (CH) aufweisen, die parallel zur Bewegung (VM) der Platte liegt, wobei die Bewegungskomponente (CH) im Wesentlichen dieselbe Geschwindigkeit aufweist wie die Platte, wenn die Nadeln (7) durch die Platte hindurchgehen, wobei die Stoßdichte des Vernadelungsarbeitsgangs im Bereich von 1 bis 25 Stößen pro cm² liegt, und
wobei mindestens die mindestens eine Textilverstärkungslage (1, 3) und das Verdickungsmaterial (2) verschiedene Materialien sind.

23. Verbundstoffmaterial, das eine Harzmatrix und einen Komplex nach Anspruch 22 enthält, wobei das Verdickungsmaterial ein Schaumstoff ist und wobei ungebrochene Schleifen (12) von Fasern aus der mindestens einen Textilverstärkungslage in dem Schaumstoff durch die mit Widerhaken versehenen Nadeln (7), die bei dem Vernadelungsarbeitsgang verwendet werden, gebildet werden, und wobei die Zapfen, die an den Seiten der Schleifen durch den Vernadelungsarbeitsgang gebildet werden, mit einer Oberflächenhaut, einschließlich mindestens einer Textillage und des Harzes, verbunden werden, wobei die Zapfen erneut in den Schaumstoff querlaufend zu der Ebene des Materials eintreten und eine Dichte von höchstens 25 Zapfen pro cm² Oberflächenhaut, die die Textillage umfasst, aufweisen.

24. Material nach dem vorhergehenden Anspruch, wobei die Dichte von Zapfen höchstens 15 Zapfen pro cm² Oberflächenhaut, die die Textillage umfasst, beträgt.

25. Material nach dem vorhergehenden Anspruch, wobei die Dichte höchstens 10 Zapfen pro cm² Oberfläche des Verbundstoffs beträgt.

26. Material nach dem vorhergehenden Anspruch, wobei die Dichte höchstens 5 Zapfen pro cm² Oberfläche des Verbundstoffs beträgt.

27. Material nach einem der Ansprüche 23 bis zum vorhergehenden Anspruch, wobei die Stoßdichte des Vernadelns mindestens 1 Zapfen pro cm² Oberfläche des Verbundstoffs beträgt.

28. Material nach einem der Ansprüche 23 bis zum vorhergehenden Anspruch, wobei die Stoßdichte des Vernadelns mindestens 2 Zapfen pro cm² Oberfläche des Verbundstoffs beträgt.

## Revendications

1. Procédé pour la préparation d'un complexe qui inclut :
a) la production d'une feuille par l'association d'une manière juxtaposée d'au moins une couche d'une structure renforçante fibreuse (1, 3) et d'une couche d'un matériau épaississant (2) qui épaissit considérablement ladite feuille,
b) la liaison par aiguilles de ladite feuille sur le côté de la structure renforçante fibreuse par passage d'aiguilles barbelées (7) à travers ladite au moins une couche d'une structure fibreuse et au moins partiellement à travers la couche de matériau épaississant quand la feuille se déplace, les aiguilles ayant une composante de mouvement (CH) qui est parallèle au mouvement (VM) de la feuille, la composante de mouvement ayant sensiblement la même vitesse que la feuille quand les aiguilles passent à travers la feuille, la liaison par aiguilles ayant une densité d'impacts allant de 1 à 25 impacts par cm²,
où ladite au moins une couche d'une structure renforçante fibreuse (1, 3) et ladite couche d'un matériau épaississant (2) sont des matériaux différents.

2. Procédé selon la revendication précédente, où la couche d'une structure renforçante fibreuse (1, 3) contient des brins de verre continus.

3. Procédé selon la revendication précédente, où la structure fibreuse contient des brins de verre qui ont été encollés par une composition contenant de l'eau, l'extrait sec de ladite composition contenant 1 à 30 % en poids d'un agent de couplage et 30 à 99 % en poids de polyvinylpyrrolidone.

4. Procédé selon l'une ou l'autre des deux revendications précédentes, où la feuille est produite en continu, le brin de verre étant une fibre formée de manière continue puis incorporée dans ladite feuille en continu, sans stockage intermédiaire du brin de verre.

5. Procédé selon l'une des revendications précédentes, où la densité d'impacts de la liaison par aiguilles est au plus 15 impacts par cm².

6. Procédé selon la revendication précédente, où la densité d'impacts de la liaison par aiguilles est au plus 10 impacts par cm².

7. Procédé selon la revendication précédente, où la densité d'impacts de la liaison par aiguilles est au plus 5 impacts par cm².

8. Procédé selon l'une des revendications précédentes, où la densité d'impacts de la liaison par aiguilles est au moins 1 impact par cm².

9. Procédé selon la revendication précédente, où la densité d'impacts de la liaison par aiguilles est au moins 2 impacts par cm².

10. Procédé selon l'une des revendications précédentes, où la feuille se déplace vers l'avant à une vitesse d'au moins 2 mètres par minute.

11. Procédé selon la revendication précédente, où la feuille se déplace vers l'avant à une vitesse d'au moins 5 mètres par minute.

12. Procédé selon la revendication précédente, où la feuille se déplace vers l'avant à une vitesse d'au moins 8 mètres par minute.

13. Procédé selon l'une des revendications précédentes, où la feuille se déplace vers l'avant à une vitesse d'au plus 35 mètres par minute.

14. Procédé selon la revendication précédente, où la feuille se déplace vers l'avant à une vitesse d'au plus 30 mètres par minute.

15. Procédé selon la revendication précédente, où la feuille se déplace vers l'avant à une vitesse d'au plus 20 mètres par minute.

16. Procédé selon l'une des revendications précédentes, où le matériau épaississant (2) est choisi dans la liste des matériaux suivants : étoffe non tissée de fibres de polypropylène gaufrées, étoffe non tissée faite de polyester, feuille tridimensionnelle faite de polyamide.

17. Procédé selon l'une des revendications 1 à 15, où le matériau épaississant (2) est une mousse et des boucles non interrompues (12) de la structure fibreuse sont formées dans la mousse par liaison par aiguilles avec des aiguilles barbelées (7).

18. Procédé selon la revendication 17, où la mousse est faite de polyuréthane et a une porosité fermée.

19. Procédé selon la revendication 17, où le matériau épaississant a une épaisseur entre 1 et 20 mm.

20. Procédé selon l'une des revendications 16 et 17, où le matériau épaississant épaissit au moins localement la feuille d'au moins 25 %.

21. Procédé selon l'une des revendications 16 et 17, où une couche de structure renforçante fibreuse (1, 3) est positionnée et liée par aiguilles sur les deux côtés du matériau épaississant (2).

22. Complexe comprenant une feuille contenant au moins une couche renforçante textile (1, 3) et un matériau épaississant (2), où ladite au moins une couche renforçante textile et ledit matériau épaississant de ladite feuille sont liés par une opération de liaison par aiguilles qui inclut le passage d'aiguilles barbelées (7) à travers ladite au moins une couche renforçante textile et au moins partiellement à travers ledit matériau épaississant quand la feuille se déplace, les aiguilles ayant une composante de mouvement (CH) qui est parallèle au mouvement (VM) de la feuille, ladite composante de mouvement (CH) ayant sensiblement la même vitesse que la feuille quand les aiguilles (7) passent à travers la feuille, où la densité d'impacts de l'opération de liaison par aiguilles va de 1 à 25 impacts par cm², et
où ladite au moins une couche renforçante textile (1, 3) et ledit matériau épaississant (2) sont des matériaux différents.

23. Matériau composite contenant une matrice de résine et un complexe selon la revendication 22, où ledit matériau épaississant est une mousse, et où des boucles non interrompues (12) de fibres provenant de ladite au moins une couche renforçante textile sont formées dans la mousse par les aiguilles barbelées (7) utilisées dans l'opération de liaison par aiguilles, et où les tenons qui sont formés au site des boucles par suite de l'opération de liaison par aiguilles sont liés à une peau de surface incluant ladite au moins une couche textile et ladite résine, lesdits tenons entrant de nouveau dans la mousse transversalement par rapport au plan du matériau et ayant une densité d'au plus 25 tenons par cm² de peau de surface incluant la couche textile.

24. Matériau selon la revendication précédente, où la densité de tenons est au plus 15 tenons par cm² de peau de surface incluant la couche textile.

25. Matériau selon la revendication précédente, où la densité est au plus 10 tenons par cm² de surface du composite.

26. Matériau selon la revendication précédente, où la densité est au plus 5 tenons par cm² de surface du composite.

27. Matériau selon l'une des revendications 23 à la revendication précédente, où la densité d'impacts de la liaison par aiguilles est au moins 1 tenon par cm² de surface du composite.

28. Matériau selon l'une des revendications 23 à la revendication précédente, où la densité d'impacts de la liaison par aiguilles est au moins 2 tenons par cm² de surface du composite.
